(19) **Europäisches Patentamt / European Patent Office / Office européen des brevets**

(11) **EP 3 286 149 B1**

(12) **FASCICULE DE BREVET EUROPEEN**

(45) Date de publication et mention de la délivrance du brevet:
**02.01.2019 Bulletin 2019/01**

(21) Numéro de dépôt: **16722290.0**

(22) Date de dépôt: **19.04.2016**

(51) Int Cl.:
*C03B 13/08* (2006.01)     *H01L 31/0236* (2006.01)
*G02B 5/04* (2006.01)     *B29C 43/08* (2006.01)
*A01G 9/24* (2006.01)     *E04D 13/03* (2006.01)
*G02B 5/02* (2006.01)     *A01G 9/14* (2006.01)
*F24S 80/50* (2018.01)

(86) Numéro de dépôt international:
**PCT/FR2016/050903**

(87) Numéro de publication internationale:
**WO 2016/170261 (27.10.2016 Gazette 2016/43)**

(54) **VERRE TEXTURÉ POUR SERRES ET PROCÉDÉ DE FABRICATION ASSOCIÉ**

TEXTURIERTES GLAS FÜR GEWÄCHSHÄUSER UND VERFAHREN ZU SEINER HERSTELLUNG

TEXTURED GLASS FOR GREENHOUSES AND ASSOCIATED PRODUCING PROCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.04.2015 FR 1553648**
**07.05.2015 FR 1554131**

(43) Date de publication de la demande:
**28.02.2018 Bulletin 2018/09**

(73) Titulaire: **Saint-Gobain Glass France**
**92400 Courbevoie (FR)**

(72) Inventeurs:
• **SCHIAVONI, Michele**
**75014 Paris (FR)**
• **BERARD, Mathieu**
**75019 Paris (FR)**
• **MIMOUN, Emmanuel**
**92100 Boulogne-billancourt (FR)**
• **MAZOYER, Simon**
**75013 Paris (FR)**

(74) Mandataire: **Saint-Gobain Recherche**
**B.P. 135**
**39, quai Lucien Lefranc**
**93303 Aubervilliers Cedex (FR)**

(56) Documents cités:
EP-B1- 1 449 017     WO-A1-2010/084290
WO-A1-2014/111662     WO-A1-2014/131610
WO-A1-2015/032618     WO-A2-2011/006957
CH-A5- 693 771

**Description**

L'invention concerne le domaine des vitrages à forte transparence et diffusants, notamment pour les serres horticoles.

Actuellement, des vitrages plans non texturés en surface sont majoritairement utilisés pour l'application serres pour horticultures. Depuis quelques années, des vitrages texturés dont la texture est obtenue par laminage sont apparus pour cette application. Ces verres texturés diffusent la lumière, ce qui a un impact positif pour la production horticole. En effet, l'effet de diffusion évite les points chauds sur les plantes et permet une meilleure pénétration de la lumière dans toutes les zones de la serre et permet d'obtenir un éclairage plus homogène. En revanche, ces verres ont une plus faible transmission comparée au même verre non-texturé, ce qui a un impact négatif pour la production horticole. La forte transmission recherchée pour ces vitrages est celle que l'on appelle la transmission hémisphérique (TLH, parfois notée $T_{HEM}$), c'est-à-dire la transmission moyennée sur plusieurs angles d'incidence. Pour chaque angle d'incidence, on mesure toute l'intensité lumineuse traversant le vitrage quel que soit l'angle d'émergence. Un vitrage pour serres a de préférence une TLH forte et un flou (tel que déterminé par la valeur de Haze, dit H) élevé. Le Haze est le rapport entre la transmission diffuse et la transmission totale du vitrage. La transmission hémisphérique est une caractéristique essentielle de ce genre de vitrage et il n'est généralement pas souhaité que le vitrage perde plus de 5% et de préférence pas plus de 3% de TLH à cause de sa texture diffusante par rapport à un verre plan non-texturé de même nature et même masse surfacique. Un gain ou une perte d'1% de TLH est déjà très sensible. Pour le Haze, une variation significative est plutôt de l'ordre de 10%.

Des vitrages photovoltaïques, tels que ceux commercialisés sous les marques Albarino-S et Albarino-T par Saint-Gobain permettent d'obtenir sensiblement ce type de comportement. Cependant, pour l'Albarino-S, le H est élevé mais la TLH est dégradée par rapport à un verre plan de même nature, et pour l'Albarino-T, la TLH reste à un niveau élevé proche de celle d'un verre lisse de même nature, mais le H est trop faible. Même s'ils représentent une certaine amélioration par rapport à un vitrage non-texturé, ces vitrages ne sont donc pas idéaux. Le WO03046617 enseigne une plaque texturée par des pyramides à usage photovoltaïque. L'Albarino-P commercialisé par Saint-Gobain a une structure de ce type. Les faces de ses pyramides ont une pente approchant 45°, mais en raison d'arrondis réalisés involontairement en pratique, la texture de ce vitrage a en réalité une pente moyenne d'environ 30° par rapport au plan général du vitrage. Si une telle texture mène à un H élevé, la TLH n'est en revanche pas suffisante. L'invention procure un meilleur compromis de ces deux propriétés TLH et H par rapport aux vitrages texturés connus.

Le WO2015/032618 enseigne une feuille de verre texturée comprenant une première face munie d'une première texturation et une seconde face munie d'une seconde texturation, ainsi qu'un ensemble comprenant une telle feuille de verre et au moins un élément destiné à utiliser le rayonnement solaire disposé sous la feuille de verre.

L'invention concerne en premier lieu une feuille transparente comprenant une texture en relief sur une première de ses faces principales, telle que si n est l'indice de réfraction du matériau comprenant la texture, $P_m$ est la pente moyenne en degré de la face texturée, Y(q) est le pourcentage de la surface texturée de pente supérieure à q/(n-1) en degré, alors on a le cumul des deux conditions sur Y(q) :

$$Y(q) > 3\% + f(q)\%.P_m.(n-1)$$

et Y(q)>10%
avec f(q)=24-(3.q) et q = 2 ou 3 .

De préférence, Y(q)>5%+f(q)%.$P_m$.(n-1). De manière encore préférée, Y(q)>10%+ f(q)%.$P_m$.(n-1). De préférence f(q)=27-(3.q) et même f(q)=30-(3.q).

Notamment, l'une des huit combinaisons suivantes est particulièrement adaptée :

- Y(q)>5%+f(q)%.$P_m$.(n-1) avec f(q)=27-(3.q) et q=2 ; ou
- Y(q)>5%+f(q)%.$P_m$.(n-1) avec f(q)=27-(3.q) et q=3 ; ou
- Y(q)>5%+f(q)%.$P_m$.(n-1) avec f(q)=30-(3.q) et q=2 ; ou
- Y(q)>5%+f(q)%.$P_m$.(n-1) avec f(q)=30-(3.q) et q=3 ; ou
- Y(q)>10%+f(q)%.$P_m$.(n-1) avec f(q)=27-(3.q) et q=2 ; ou
- Y(q)>10%+f(q)%.$P_m$.(n-1) avec f(q)=27-(3.q) et q=3 ; ou
- Y(q)>10%+f(q)%.$P_m$.(n-1) avec f(q)=30-(3.q) et q=2 ; ou
- Y(q)>10%+f(q)%.$P_m$.(n-1) avec f(q)=30-(3.q) et q=3.

Dans le cadre de la présente demande et notamment dans les exemples, la TLH et le Haze sont mesurés selon les méthodes détaillées dans « Proc 7th IS on light in Horticultural Systems, Eds : S. Hemming and E. Heuvelink, Acta Hort.956, ISHS 2012 ». Dans ce document, on fait mention d'un Haze mesuré à 1,5°. Or dans le domaine des matériaux transparents, le Haze est souvent mesuré à 2,5°. Un standard ne s'est pas encore totalement affirmé dans le domaine des serres pour l'horticulture, bien que le Haze à 1,5 degré soit aujourd'hui plus utilisé. Selon l'invention, on introduit un f(q) pour tenir compte de ces deux façons de mesurer le Haze. Pour maximiser un Haze à 1,5° tout en gardant un très bon compromis avec la TLH, on prend q=2 alors que pour maximiser un Haze à 2,5° tout en gardant un très bon compromis avec la TLH, on prend q=3.

Selon l'invention, on utilise un vitrage ayant une distribution de pentes comprenant relativement peu de zones à très faible pente et peu de zones à grande pente et dont la distribution de pentes est voisine de q/(n-1) en °, avec q=2 ou 3, c'est-à-dire proche de 4° pour q=2 et proche de 6° pour q=3 pour du verre d'indice 1,5. Grâce à cette géométrie, on obtient une bien meilleure association de valeurs TLH et H.

La texture en relief peut être réalisée dans un matériau du type verre organique ou inorganique. Notamment, il peut s'agir d'un verre minéral comprenant au moins 40% en poids de $SiO_2$.

L'indice de réfraction du matériau comprenant la texture est généralement compris dans le domaine allant de 1,4 à 1,65 à 587nm.

La feuille est peu absorbante dans le domaine spectral de la photosynthèse (400-700 nm) et il en est de même pour tout matériau compris dans la feuille. L'absorption de la feuille selon l'invention dans ce domaine spectral est inférieure à 2% et de préférence inférieur à 1 % et même inférieure à 0,5%. L'absorption est obtenue par la mesure de la transmission et réflexion en incidence normale et par la relation Absorption (%) = 100% - transmission (%) - réflexion (%). Les mesures de transmission et de réflexion (globales et mesurées à l'aide d'une sphère intégrante) sont faites à l'aide d'un spectrophotomètre et correspondent à une moyenne des valeurs de transmission et de réflexion pour les longueurs d'onde du domaine 400-700 nm.

La pente en un point de la surface d'une feuille correspond à l'angle formé entre le plan tangent en ce point et le plan général de la feuille. La mesure de la pente en un point est réalisée à partir de la mesure de la variation de hauteur au voisinage de ce point et par rapport au plan général de la feuille. L'homme du métier connait les appareils capables de réaliser ces mesures de hauteur. La mesure de la pente moyenne $P_m$ de la surface est déterminée à partir de la mesure de pentes en des points répartis sur un maillage carré de période 20 μm. On calcule alors la moyenne de la pente de tous ces points.

De préférence, la texture comprend des motifs relativement grands car cela permet de mieux contrôler les pentes effectivement créées par laminage. En effet, il est en pratique très difficile d'obtenir par laminage une texture aux pentes contrôlées lorsque la période des motifs est inférieure à 1 mm, notamment dans un verre minéral. Le procédé de laminage produit nécessairement des arrondis non désirés et ces arrondis aux pentes incontrôlées occupent d'autant plus de surface que le motif de base est de faible taille. En agrandissant le motif, le même arrondi occupe une fraction plus faible de la période totale du motif et a donc un plus faible impact.

Pour obtenir par laminage une texture proche de celle souhaitée, on réalise de préférence des motifs dont la taille est d'au moins 1 mm et de préférence d'au moins 1,5 mm et même de préférence d'au moins 2 mm et même de préférence d'au moins 2,5 mm (par taille, on entend le diamètre du plus petit cercle contenant le motif). De préférence, les motifs ont une taille d'au plus 8 mm. De préférence les motifs sont jointifs.

On rappelle que le $R_{Sm}$ (période moyenne ou pas moyen) d'un profil (c'est-à-dire selon un segment de droite) d'une surface est défini par la relation :

$$R_{sm} = \frac{1}{n} \sum_{i=1}^{i=n} Si = \frac{S_1 + S_2 + .... + S_n}{n}$$

dans laquelle Si est la distance entre deux passages par zéro (ligne médiane) et montants, n+1 étant le nombre de passage par zéro en montant dans le profil considéré. Ce paramètre $R_{Sm}$ est représentatif de la distance entre pics, c'est-à-dire du pas de la texture parallèlement au plan général de la feuille. Les valeurs de $R_{Sm}$ sont données après utilisation de filtres gaussiens avec coupures (ou longueur de base, cut-off en anglais) à 25 μm et 8 mm (suppression des périodes inférieures à 25 μm et supérieures à 8 mm). Les mesures de $R_{sm}$ sont réalisées sur une distance d'au moins 40 mm. Pour tout point de la surface texturée, le $R_{sm}$ autour dudit point correspond à la moyenne arithmétique des $R_{sm}$ pour 10 profils partant en étoile à partir du point considéré. Pour le calcul du $R_{sm}$ autour d'un point, on enlève les valeurs supérieures ou égales à 40 mm. Cela évite de prendre en compte des profils dans certaines lignes directrices de textures particulières comme celle de prismes parallèles ou de lignes droites entre des pyramides alignées (valeur de $R_{sm}$ infini ou non-calculable). On définit également un $R_{sm}$ moyen d'une surface texturée en calculant la moyenne arithmétique des $R_{sm}$ autour d'un point, les points étant choisis sur un quadrillage carré avec un pas de 5 cm.

De préférence, le $R_{sm}$ moyen de la surface texturée est compris dans le domaine allant de 1 mm à 8 mm et de préférence dans le domaine allant de 1,5 à 8 mm et même dans le domaine allant de 2 mm à 8 mm et même dans le domaine allant de 2,5 mm à 8 mm. De manière encore préférée, le $R_{sm}$ autour de tout point à la surface texturée est compris dans le domaine allant de 1 mm à 8 mm et de préférence dans le domaine allant de 1,5 à 8 mm et même dans le domaine allant de 2 mm à 8 mm et même dans le domaine allant de 2,5 mm à 8 mm.

Les pentes réalisées sur un verre minéral par laminage à chaud, généralement dans un domaine de température allant de 800 à 1300°C, diminuent légèrement pendant le formage. Ainsi, si l'on vise au niveau de la feuille de verre une pente moyenne de valeur $P_m$, on utilise de préférence un rouleau imprimeur dont les motifs ont une pente moyenne d'au moins $P_m + 0,5°$, voire même d'au moins $P_m + 1°$. Plus les motifs de la texture sont gros ($R_{sm}$ moyen plus élevé), plus la texture effectivement imprimée se rapproche de celle du rouleau et moins il est nécessaire d'apporter une correction aux motifs du rouleau.

Ainsi, pour un $R_{sm}$ moyen compris entre 1 et 1,5 mm, la pente moyenne de la texture du rouleau peut être augmentée de 0,5° à 10° par rapport à la pente moyenne de la texture souhaitée. Pour un $R_{sm}$ moyen compris entre 1,5 et 2 mm, la pente moyenne de la texture du rouleau peut être augmentée de 0,5° à 8° par rapport à la pente moyenne de la texture souhaitée. Pour un $R_{sm}$ moyen compris entre 2 et 2,5 mm, la pente moyenne de la texture du rouleau peut être augmentée de 0,5° à 6° par rapport à la pente moyenne de la texture souhaitée. Pour un $R_{sm}$ moyen supérieur à 2,5 mm, la pente moyenne de la texture du rouleau peut être augmentée de 0,5° à 5° par rapport à la pente moyenne de la texture souhaitée. Les motifs de la texture peuvent être des motifs linéaires parallèles comme des prismes parallèles ou être des motifs pouvant s'inscrire dans un cercle comme des cônes ou des pyramides.

L'invention est utile pour faire office de vitrage laissant passer la lumière de serres pour l'horticulture, ainsi que pour d'autres applications nécessitant une forte TLH et un fort H comme une véranda, un hall d'accueil, un espace public.

Selon l'invention, les deux faces principales de la feuille peuvent présenter une texture. Dans ce cas, si la texture de l'une des deux faces n'est pas selon l'invention, alors, de préférence, la texture selon l'invention est celle des deux faces dont la pente moyenne est la plus forte. La face à pente moyenne moins forte est de préférence telle que $P_m'.2.(n'-1)$ soit inférieur à 3° et même inférieur à 2°, $P_m'$ et $n'$ étant respectivement la pente moyenne et l'indice de réfraction du matériau comprenant la texture de cette face à pente moyenne moins forte.

L'invention concerne également une feuille avec $P_m.(n-1)$ supérieur à $P_m'.(n'-1)$, $P_m$ et $P_m'$ représentant la pente moyenne respectivement de la première et deuxième face principale et $n$ et $n'$ étant l'indice de réfraction du matériau comprenant la texture respectivement de la première et de la deuxième face principale. De préférence, la texture de la deuxième face principale a une pente moyenne telle que $P_m'.2.(n'-1)$ soit inférieur à 3° et même inférieur à 2°. De préférence, si $Y'(q)$ est le pourcentage de la surface texturée de pente supérieure à $q/(n'-1)$ en degré de la deuxième face principale, alors on a la relation

$$Y'(q) > 3\% + f(q)\%.P_m'.(n'-1)$$

avec $f(q)=24-(3.q)$
et $q$ valant 2 à la fois pour pour $Y(q)$ et pour $Y'(q)$, ou alors $q$ valant 3 à la fois pour pour $Y(q)$ et pour $Y'(q)$.

Notamment, les deux faces de la feuille peuvent être selon l'invention.

Un effet antireflet peut être obtenu sur l'une ou les deux faces de la feuille, et notamment sur la face texturée. Cet effet antireflet peut être obtenu par le dépôt d'une couche ou de plusieurs couches formant un empilement, par attaque chimique ou toute autre technique adaptée. L'effet antireflet est choisi pour être efficace aux longueurs d'onde 400-700 nm. Un revêtement anti-reflet (couche anti-reflet ou empilement de couches à effet anti-reflet) a généralement une épaisseur comprise dans le domaine allant de 10 à 500 nm.

La feuille peut être réalisée dans un matériau totalement monolithique. La feuille peut aussi être réalisée dans un matériau monolithique sur lequel on a éventuellement apposé une couche anti-reflet ou un empilement de couches à effet anti-reflet sur l'une de ses faces ou sur ses deux faces. Cependant, la texture peut être réalisée dans un premier matériau relativement mince comprenant la texture et associé dans la feuille à un second matériau donnant de la rigidité à l'ensemble de la feuille. Il convient que ce premier matériau soit présent en une épaisseur minimale permettant la réalisation des motifs en relief. De préférence, la différence des indices de réfraction de ces deux matériaux ne dépasse pas 0,2 et de manière encore préférée ne dépasse pas 0,1. On est dans ce cas d'association de plusieurs matériaux lorsque l'on réalise la texture par embossage d'une couche sol-gel déposée sur une feuille transparente, notamment en verre. Ainsi, la texture peut être réalisé en un premier matériau rapporté sur une feuille d'un deuxième matériau. La feuille peut également comprendre plus de deux matériaux.

De préférence, deux matériaux juxtaposés dans la feuille ont des indices de réfraction dont la différence ne dépasse pas 0,2 et de préférence ne dépassent pas 0,1. Cette préférence concerne la juxtaposition au sein de la feuille de matériaux présents tous deux à plus de 500 nm de la surface de la feuille, la surface de la feuille étant en contact avec l'air ambiant. Un matériau présent à plus de 500 nm de la surface de la feuille peut également être présent à la surface de la feuille, son épaisseur étant alors supérieure à 500 nm. La présence d'un matériau à plus de 500 nm de la surface est déterminé orthogonalement par rapport à la surface réelle, laquelle suit la texture, et non pas par rapport au plan général de la feuille. Cette préférence sur la différence d'indices de réfraction, ne concerne donc pas un revêtement antireflet (couche antireflet ou empilement antireflet), lequel est en contact avec l'air ambiant et est généralement réalisées dans des matériaux aux indices de réfraction assez éloignés de celui sur lequel il est déposé, et en épaisseur inférieure à 500 nm. Une couche antireflet ou un empilement antireflet sont des revêtements minces ne modifiant pas la texture en relief sur laquelle ils sont appliqués. Ils suivent le relief en surface. C'est pourquoi on peut dire qu'un revêtement de surface antireflet (couche ou empilement de couches), en contact avec l'air ambiant, n'est pas le matériau comprenant la texture selon l'invention.

Le matériau comprenant la texture selon l'invention est en épaisseur suffisante pour conférer à lui seul la texture à la surface. Il peut être recouvert d'un revêtement antireflet (couche antireflet ou empilement à effet anti-reflet) mais ce revêtement suit le relief en surface donné par le matériau comprenant la texture. Ainsi, le matériau comprenant la texture selon l'invention est en épaisseur suffisante pour constituer plus de 90% et de préférence plus de 95% en volume de la matière comprise entre deux plans parallèles au plan général de la feuille et dont l'un passe par le point le plus extérieur de la texture en contact avec l'air ambiant et dont l'autre passe par le point le plus intérieur de la texture en contact avec l'air ambiant. Dans la pratique, c'est dans ce matériau que l'on imprime la texture par un outil comprenant le même relief inversé ou par attaque chimique. Le matériau comprenant la texture est en épaisseur supérieure à 5 $\mu$m selon une direction orthogonale à la surface réelle (laquelle suit la texture de surface), et en épaisseur supérieure à 5 $\mu$m selon une direction orthogonale au plan général de la feuille.

Si la texture selon l'invention ne comprend pas à sa surface de couche ou d'empilement antireflet, alors le matériau comprenant la texture selon l'invention est en contact avec l'air ambiant. Si la texture selon l'invention comprend à sa surface une couche ou un empilement anti-reflet, alors c'est la couche ou l'empilement qui est en contact avec l'air ambiant.

La texture dans un matériau monolithique, notamment en verre, peut généralement être réalisée par gaufrage ou laminage avec au moins un rouleau texturé, ou par attaque acide. La feuille de verre texturée obtenue peut être recouverte d'un revêtement antireflet.

Si la feuille selon l'invention comprend une feuille de verre, celle-ci est de préférence trempée thermiquement. Pour ce faire, et pour le cas où un revêtement antireflet doit lui-être appliqué, on peut notamment procéder ainsi :

- laminage de verre à sa température de ramollissement par au moins un rouleau texturé menant à une feuille de verre texturée, puis
- refroidissement, puis,
- application sur l'une ou les deux faces de la feuille texturée d'une ou plusieurs couche(s) sol-gel précurseur d'un revêtement anti-reflet, puis
- chauffage de la feuille texturée revêtue, suivi d'un refroidissement de trempe thermique ; le chauffage sert à la fois à porter le verre à la température permettant le refroidissement de trempe, mais aussi à la cuisson du revêtement sol-gel.

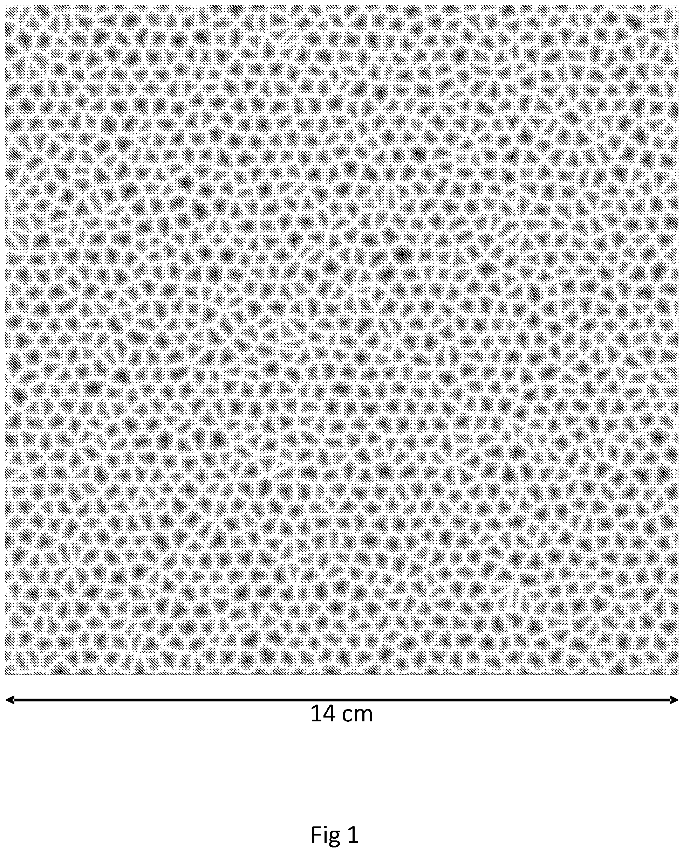

La figure 1 montre la face texturée d'une feuille de verre selon l'invention, obtenue par laminage et selon l'exemple 1. La texture d'une face principale comprend des pyramides à bases irrégulières en creux et jointives. Le degré de gris reflète la profondeur des points à la surface, les zones les plus sombres étant les plus profondes. Sur chacune des figures 1 à 3, les points les plus clairs sont à la même hauteur et les points les plus sombres sont à la même hauteur. La profondeur des motifs est la différence de hauteur orthogonalement au plan général de la plaque entre les points les plus clairs et les points les plus sombres.

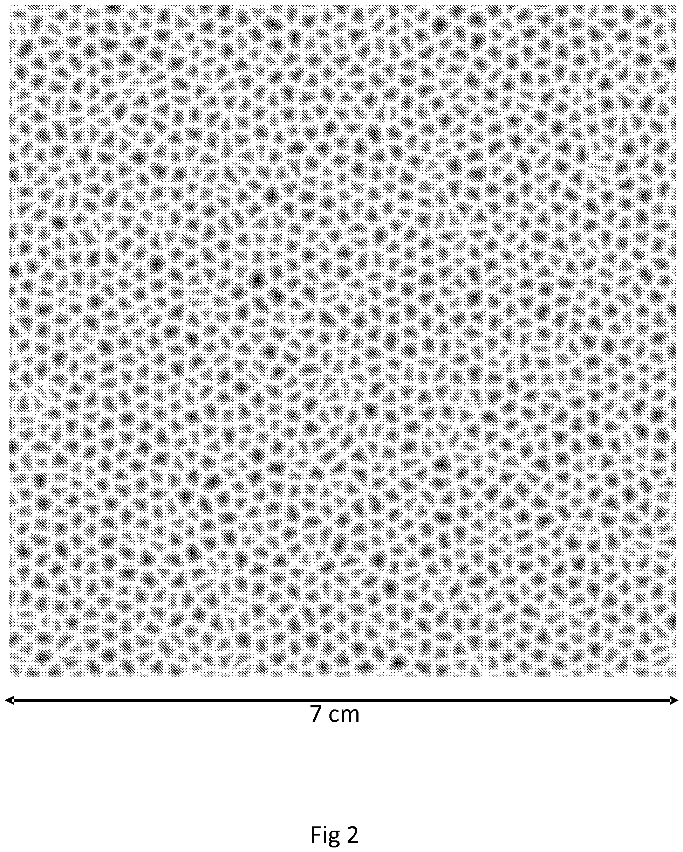

La figure 2 montre la face texturée d'une feuille de verre selon l'invention, obtenue par laminage et selon l'exemple 2. La texture d'une face principale comprend des pyramides à bases irrégulières en creux et jointives. Les pyramides sont plus petites que dans le cas de la figure 1, de sorte que les zones involontairement arrondies sont plus importantes. Ces zones arrondies n'ont pas forcément la pente souhaitée.

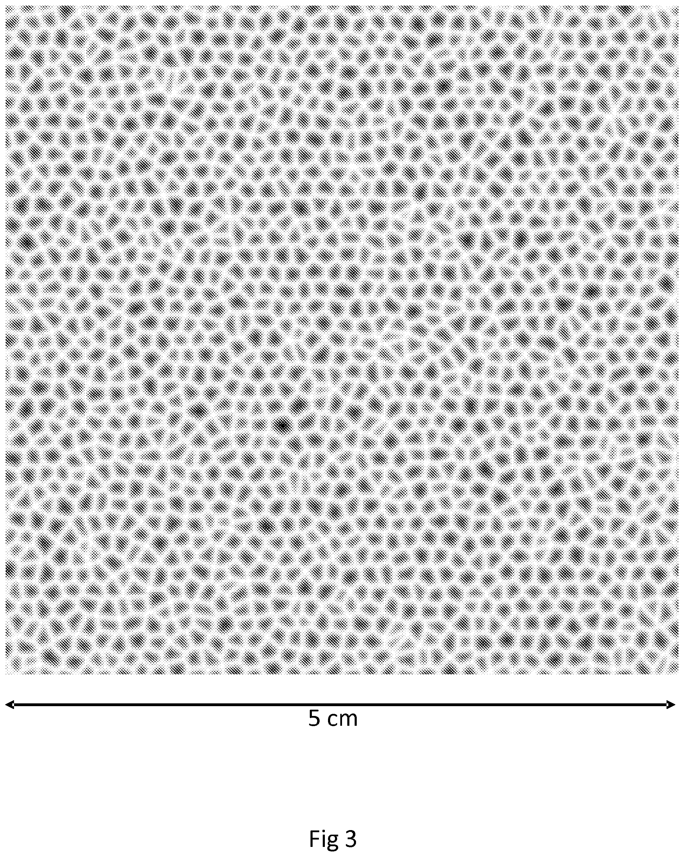

La figure 3 montre la face texturée d'une feuille de verre selon l'invention, obtenue par laminage et selon l'exemple 3. La texture d'une face principale comprend des pyramides à bases irrégulières en creux et jointives. Les pyramides sont plus petites que dans le cas des figures 1 et 2, de sorte que les zones involontairement arrondies sont plus importantes. Ces zones arrondies n'ont pas forcément la pente souhaitée.

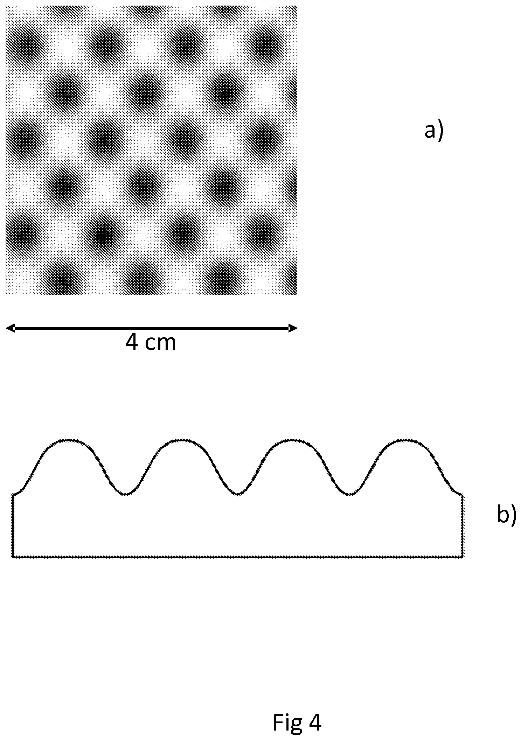

La figure 4 montre la face la plus fortement texturée d'une feuille d'Albarino-S vue du dessus en a) et vue de côté en b). Bien entendu les motifs en b) ne sont pas à l'échelle. On montre ici que les motifs sont des bosses régulièrement répartis à la surface.

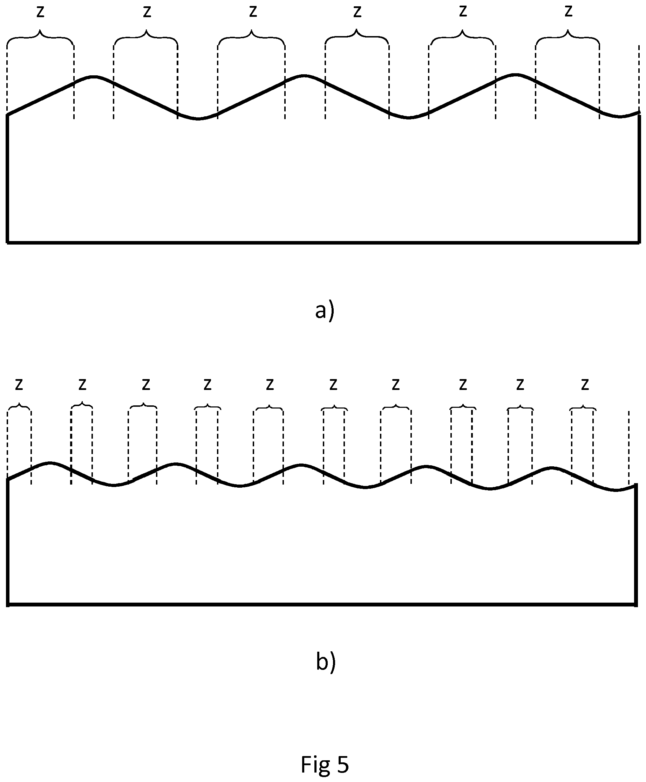

Par la figure 5, on illustre l'impact d'un changement de taille de motifs pyramidaux (et donc d'un changement de $R_{sm}$). Les 2 textures en a) et b) ont en effet les mêmes arrondis avec les mêmes rayons de courbure au niveau des sommets et des creux des motifs. C'est ce que l'on obtient dans la pratique par laminage du verre avec un rouleau texturé ayant des pyramides à sa surface sans arrondis au niveau des sommets et des creux des motifs. La texture de plus grande taille en a) a une texture plus proche de la texture idéale puisqu'elle comporte des zones plus grandes de pente adaptée. Les zones marquées « z » sont de pente adaptée.

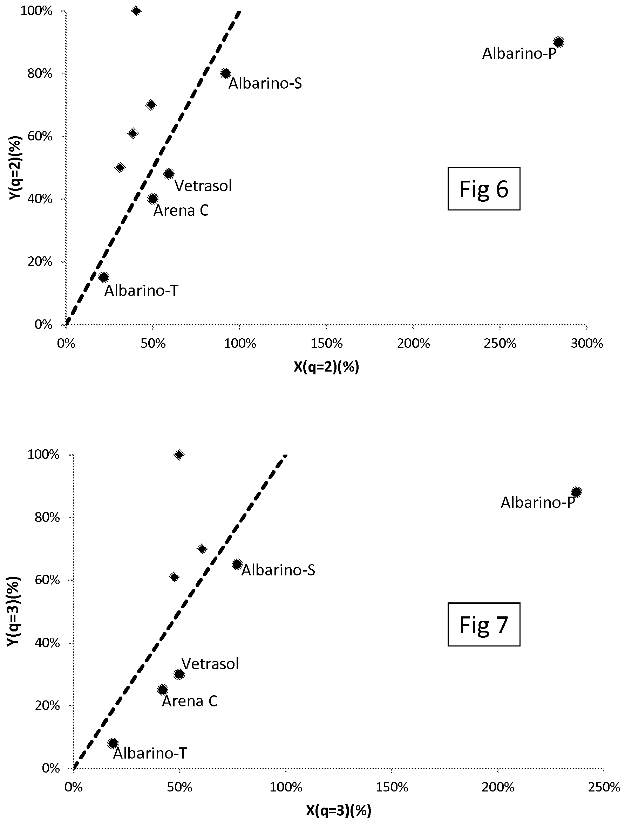

La figure 6 montre dans le cas de q=2 comment l'invention se distingue de l'art antérieur par la droite Y=X, avec X= 3%+18%.$P_m$.(n-1) car f(q) = 18% pour q = 2. Les points sur cette figure correspondent aux exemples du tableau 1. Le domaine de l'invention se situe au-dessus de cette droite et au-dessus d'une droite horizontale Y=10%.

La figure 7 montre dans le cas de q=3 comment l'invention se distingue de l'art antérieur par la droite Y=X, avec X = 3%+15%.$P_m$.(n-1) car f(q) = 15% pour q = 3. Les points sur cette figure correspondent aux exemples du tableau 2. Le domaine de l'invention se situe au-dessus de cette droite et au-dessus d'une droite horizontale Y=10%.

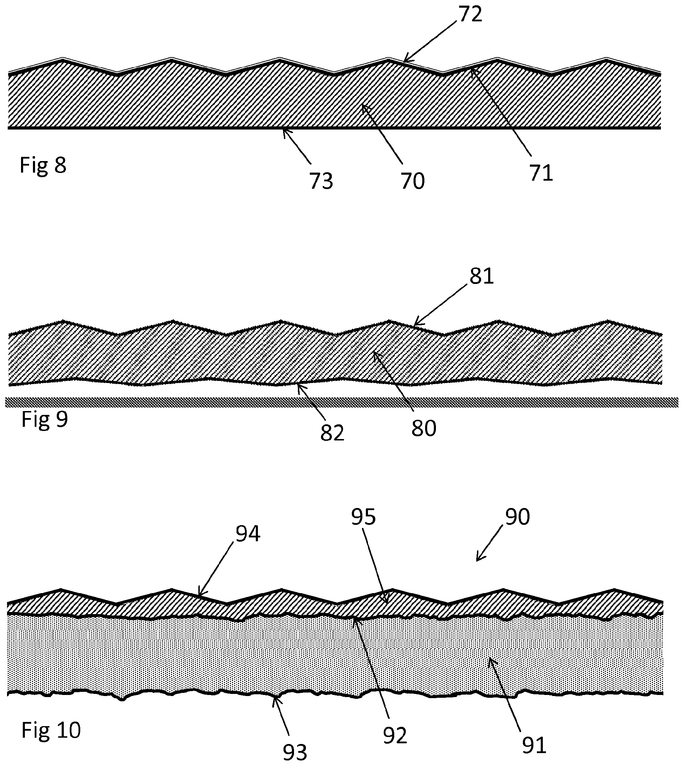

La figure 8 montre une feuille 70 selon l'invention en coupe dans sa tranche. Les textures et épaisseurs ne sont pas à l'échelle. Cette feuille 70 est en un verre minéral silicosodocalcique obtenu par laminage entre deux rouleaux dont un était texturé. La face supérieure 71 de la feuille présente une texture selon l'invention avec des motifs pyramidaux juxtaposés. Une couche anti-reflet 72 a été déposée sur la face texturée du substrat monolithique. La seconde face 73 de la feuille est plane, sans texture particulière. Le matériau comprenant la texture est le matériau 70 et non pas le matériau de la couche 72.

La figure 9 montre une feuille 80 selon l'invention en coupe dans sa tranche. Les textures et épaisseurs ne sont pas à l'échelle. Cette feuille 80 est en un verre minéral silicosodocalcique obtenu par laminage entre deux rouleaux, tous deux texturés. La face supérieure 81 de la feuille présente une texture selon l'invention avec des motifs pyramidaux juxtaposés. La deuxième face 82 de la feuille présente une texture (selon l'invention ou non) avec des motifs pyramidaux juxtaposés, la pente moyenne sur cette deuxième face 82 étant inférieure à la pente moyenne sur la première face 81. Cette feuille est totalement monolithique. Son matériau comprend les textures de chaque face.

La figure 10 montre une feuille 90 selon l'invention en coupe dans sa tranche. Les textures et épaisseurs ne sont pas à l'échelle. Une feuille substrat 91 en verre silicosodocalcique donne sa rigidité à l'ensemble. Cette feuille substrat 91 est une feuille minérale obtenue par laminage à chaud entre deux rouleaux texturés. Les deux faces 92 et 93 de cette feuille substrat 91 sont en conséquence texturées. On peut considérer que la feuille substrat 91 est une feuille d'Albarino-T. Au-dessus de la face 92 de la feuille substrat 91 a été réalisée une texture 94 selon l'invention par embossage d'une couche sol-gel. Le matériau sol-gel 95 et le matériau de la feuille substrat 91 présentent des indices de réfraction proches, la différence de leurs indices de réfraction ne dépassant pas 0,1. Ici, le matériau comprenant la texture selon l'invention est le matériau sol-gel 95.

Dans les exemples qui suivent, les feuilles avaient une épaisseur de 4 mm. On a fait varier la pente moyenne et le % de pente supérieure à q/(n-1) en dégré, q étant égal à 2 pour les exemples 1 à 9 et à 3 pour les exemples 10 à 17. Les résultats sont rapportés respectivement dans les tableaux 2 et 3. Les valeurs de Haze sont mesurées à 1,5° pour les exemples 1 à 9 et à 2,5° pour les exemples 10 à 18. Les valeurs de TLH sont données par rapport à du verre plat de même nature et de même masse surfacique. Il s'agit donc de la perte de TLH en %, noté ΔTLH par rapport à du verre plat. En effet, le verre plat a nécessairement une plus forte valeur de TLH que les verres texturés dans le même matériau. On cherche à ce que ΔTLH soit le plus faible possible.

## EXEMPLES 1 à 9

Pour les exemples 1 à 4, on réalise par laminage des feuilles de verre présentant une face principale texturée dont la texture est une répétition de motifs pyramidaux à base irrégulière en creux de tailles différentes comme reflété par la valeur de $R_{sm}$. Les vitrages des exemples 5 à 9 sont commerciaux et comparatifs. Les textures obtenues pour les exemples 1 à 3 sont celles montrées respectivement sur les figures 1 à 3, la profondeur étant la différence de hauteur entre les points les plus clairs et les plus sombres de ces figures. De la figure 1 à la figure 3, on observe une augmentation de la proportion de zones arrondies ne correspondant pas exactement à celles souhaitées. La texture de l'exemple 4 est similaire en vue de dessus à celle de la figure 2, la différence étant dans la profondeur. Les exemples 5 à 9 correspondent à des caractéristiques mesurées sur des verres texturés commercialisés sous les marques figurant dans la colonne 1 du tableau. Pour tous les exemples, l'indice de réfraction du verre minéral utilisé était de 1,52. Dans le tableau, X représente 3%+18%.$P_m$.(n-1) car f(q) = 18% pour q = 2.

Tableau 1

| exemple n° | profondeur (μm) | $R_{sm}$ moyen (mm) | Pm (°) | X (%) | Y (%) | Haze (% à 1,5°) | ΔTLH (%) |
|---|---|---|---|---|---|---|---|
| 1 | 174 | 3,6 | 4 | 40,44 | **100** | 100% | 2 |
| 2 | 100 | 1,8 | 3,8 | 38,55 | **61** | 75% | 1,9 |
| 3 | 100 | 1,3 | 4,9 | 48,9 | **70** | 79% | 2,5 |
| 4 | 80 | 1,8 | 3 | 31,08 | **50** | 60% | 1,5 |

(suite)

| exemple n° | profondeur (μm) | R$_{sm}$ moyen (mm) | Pm (°) | X (%) | Y (%) | Haze (% à 1,5°) | ΔTLH (%) |
|---|---|---|---|---|---|---|---|
| 5 (Albarino-S) | - | 0,8 | 9,5 | 91,92 | *80* | 85% | 5 |
| 6 (Albarino-T) | - | 0,8 | 2 | 21,72 | *15* | 20% | 1 |
| 7 (Albarino-P) | - | 2,5 | 30 | 283,8 | *90* | 95% | 15 |
| 8 (Arena C) | - | | 5 | 49,8 | *40* | 50% | 2,5 |
| 9 (Vetrasol) | - | | 6 | 59,16 | *48* | 56% | 3 |

On constate que pour l'exemple 5 la valeur de Haze est bonne mais que la TLH est extrêmement réduite. En ce qui concerne l'exemple 6, la valeur de Haze est extrêmement faible. Les exemples 7 à 9 n'offrent pas de très bons compromis de propriété. Les exemples 1 à 4 offrent d'excellents compromis de propriétés en Haze et TLH. Cela correspond au fait que pour ces exemples, Y>X.

## EXEMPLES 10 à 17

Pour les exemples 10 à 12, on réalise par laminage des feuilles de verre présentant une face principale texturée dont la texture est une répétition de motifs pyramidaux à base irrégulière en creux de tailles différentes comme reflété par la valeur de R$_{sm}$. Les vitrages des exemples 13 à 17 sont commerciaux et comparatifs. Les textures obtenues pour les exemples 10 à 12 sont celles montrées respectivement sur les figures 1 à 3, la profondeur étant la différence de hauteur entre les points les plus clairs et les plus sombres de ces figures.Ces textures se différencient de celles des exemples 1 à 3 par la profondeur qui est ici choisie plus profonde. Les exemples 13 à 17 correspondent à des caractéristiques mesurées sur des verres texturés commercialisés sous les marques figurant dans la colonne 1 du tableau 2. Pour tous les exemples, l'indice de réfraction du verre minéral utilisé était de 1,52. Dans le tableau 2, X représente 3%+15%.P$_m$.(n-1) car f(q) = 15% pour q = 3.

Tableau 2

| exemple n° | profondeur (μm) | Rsm moyen (mm) | Pm (°) | X (%) | Y (%) | Haze (% à 2,5°) | ΔTLH (%) |
|---|---|---|---|---|---|---|---|
| 10 | 260 | 3,6 | 6 | 49,8 | 100 | 100% | 3 |
| 11 | 150 | 1,8 | 5,7 | 47,5 | 61 | 70% | 2,9 |
| 12 | 150 | 1,3 | 7,4 | 60,7 | 70 | 75% | 3,7 |
| 13 (Albarino-S) | - | 0,8 | 9,5 | 77,1 | 65 | 75% | 5 |
| 14 (Albarino-T) | - | 0,8 | 2 | 18,6 | *8* | 10% | 1 |
| 15 (Albarino-P) | - | 2,5 | 30 | 237,0 | *88* | 92% | 15 |
| 16 (Arena C) | - | | 5 | 42,0 | *25* | 30% | 2,5 |
| 17 (Vetrasol) | - | | 6 | 49,8 | *30* | 32% | 3 |

On constate que pour l'exemple 13 la valeur de Haze est bonne mais que la TLH est extrêmement réduite. En ce qui concerne l'exemple 14, la valeur de Haze est extrêmement faible. Les exemples 13 à 17 n'offrent pas de très bons compromis de propriété. Les exemples 10 à 12 offrent d'excellents compromis de propriétés en Haze et TLH. Cela correspond au fait que pour ces exemples, Y>X.

**Revendications**

1. Feuille transparente (70, 80) comprenant une texture en relief sur une première de ses faces (71, 81) principales, **caractérisé en ce que** si n est l'indice de réfraction du matériau comprenant la texture, P$_m$ est la pente moyenne en degré de la face texturée, Y(q) est le pourcentage de la surface texturée de pente supérieure à q/(n-1) en degré, alors Y(q) cumule les deux conditions

$$Y(q) > 3\% + f(q)\%.P_m.(n-1)$$

et Y(q)>10%
avec f(q)=24-(3.q)
et q = 2 ou 3 .

2. Feuille selon la revendication précédente, **caractérisé en ce que**

$$Y(q) > 5\% + f(q)\%.P_m.(n-1) .$$

3. Feuille selon la revendication précédente, **caractérisé en ce que**

$$Y(q) > 10\% + f(q)\%.P_m.(n-1) .$$

4. Feuille selon l'une des revendications précédentes, **caractérisé en ce que** f(q)=27-(3.q) voire même f(q)=30-(3.q).

5. Feuille selon l'une des revendications précédentes, **caractérisé en ce que** q=2 .

6. Feuille selon l'une des revendications 1 à 4, **caractérisé en ce que** q=3.

7. Feuille selon la revendication 1, **caractérisé en ce que** l'on a l'une des combinaisons suivantes :

- $Y(q)>5\%+f(q)\%.P_m.(n-1)$ avec f(q)=27-(3.q) et q=2 ; ou
- $Y(q)>5\%+f(q)\%.P_m.(n-1)$ avec f(q)=27-(3.q) et q=3 ; ou
- $Y(q)>5\%+f(q)\%.P_m.(n-1)$ avec f(q)=30-(3.q) et q=2 ; ou
- $Y(q)>5\%+f(q)\%.P_m.(n-1)$ avec f(q)=30-(3.q) et q=3 ; ou
- $Y(q)>10\%+f(q)\%.P_m.(n-1)$ avec f(q)=27-(3.q) et q=2 ; ou
- $Y(q)>10\%+f(q)\%.P_m.(n-1)$ avec f(q)=27-(3.q) et q=3 ; ou
- $Y(q)>10\%+f(q)\%.P_m.(n-1)$ avec f(q)=30-(3.q) et q=2 ; ou
- $Y(q)>10\%+f(q)\%.P_m.(n-1)$ avec f(q)=30-(3.q) et q=3 .

8. Feuille selon l'une des revendications précédentes, **caractérisé en ce que** l'indice de réfraction du matériau comprenant la texture est compris dans le domaine allant de 1,4 à 1,65 à 587nm.

9. Feuille selon l'une des revendications précédentes, **caractérisé en ce que** l'absorption de la feuille dans le domaine spectral compris dans le domaine allant de 400 à 700 nm est inférieure à 2% et de préférence inférieur à 1 % et même inférieure à 0,5%.

10. Feuille selon l'une des revendications précédente, **caractérisé en ce que** le matériau comprenant la texture est en verre minéral.

11. Feuille selon l'une des revendications précédentes, **caractérisé en ce que** la rugosité de la surface texturée est telle que le $R_{sm}$ moyen est supérieure à 1 mm et de préférence supérieure à 1,5 mm et même supérieure à 2 mm, et inférieur à 8 mm.

12. Feuille selon l'une des revendications précédentes, **caractérisé en ce que** la texture comprend des motifs jointifs de taille comprise dans le domaine allant de 2 à 8 mm.

13. Feuille selon l'une des revendications précédentes, **caractérisé en ce que** sa deuxième face principale (82) présente également une texture, telle que $P_m.(n-1)$ est supérieur à $P_m'.(n'-1)$, $P_m'$ représentant la pente moyenne de la deuxième face principale et n' étant l'indice de réfraction du matériau comprenant la texture de la deuxième face principale.

14. Feuille selon la revendication précédente, **caractérisé en ce que** la texture de la deuxième face principale à une pente moyenne telle que $P_m'.2.(n'-1)$ soit inférieur à 3° et même inférieur à 2°.

**15.** Feuille selon l'une des deux revendications précédentes, **caractérisé en ce que**, si Y'(q) est le pourcentage de la surface texturée de pente supérieure à q/(n'-1) en degré de la deuxième face principale, alors on a la relation

$$Y'(q) > 3\% + f(q)\%.P_m'.(n-1)$$

avec f(q)=24-(3.q) et
q valant 2 à la fois pour pour Y(q) et pour Y'(q), ou q valant 3 à la fois pour Y(q) et pour Y'(q).

**16.** Feuille selon l'une des revendications précédentes, **caractérisé en ce qu'**elle comprend un revêtement anti-reflet (72) sur une ou sur ses deux faces.

**17.** Serre horticole équipée d'une feuille de l'une des revendications précédentes.

**18.** Procédé de fabrication d'une feuille de l'une des revendications précédentes de feuille par laminage par un rouleau imprimeur texturé.

**19.** Procédé selon la revendication précédente, **caractérisé en ce que** le rouleau imprimeur texturé supporte des motifs ayant une pente moyenne supérieure à la pente moyenne de la première face principale de la feuille obtenue.

**20.** Procédé selon la revendication précédente, **caractérisé en ce que** le rouleau imprimeur texturé supporte des motifs ayant une pente moyenne supérieure d'au moins 0,5° à la pente moyenne de la première face principale de la feuille obtenue.

**21.** Procédé selon la revendication précédente, **caractérisé en ce que** le rouleau imprimeur texturé supporte des motifs ayant une pente moyenne supérieure d'au moins 1° à la pente moyenne de la première face principale de la feuille obtenue.

**Patentansprüche**

**1.** Transparente Folie (70, 80) mit Relief-Textur auf einer ersten ihrer Hauptseiten (71, 81), **dadurch gekennzeichnet dass**, wenn n der Brechungsindex des Materials mit der Textur ist, $P_m$ die durchschnittlich Neigung in Grad der texturierten Seite ist, Y(q) der prozentuale Anteil der texturierten Fläche mit einer Neigungvon mehr als q/(n-1) in Grad ist, Y(q) die beiden Bedingungen kumuliert.

$$Y(q) > 3\% + f(q)\%.P_m.(n-1)$$

und Y(q)>10%
mit f(q)=24-(3.q)
und q=2 oder 3.

**2.** Folie nach dem vorigen Anspruch, **dadurch gekennzeichnet, dass**

$$Y(q) > 5\% + f(q)\%.P_m.(n-1).$$

**3.** Folie nach dem vorigen Anspruch, **dadurch gekennzeichnet, dass**

$$Y(q) > 10\% + f(q)\%.P_m.(n-1).$$

**4.** Folie nach einem der vorigen Ansprüche, **dadurch gekennzeichnet, dass** f(q)=27-(3.q) sogar f(q)=30-(3.q).

**5.** Folie nach einem der vorigen Ansprüche, **dadurch gekennzeichnet, dass** q=2.

**6.** Folie nach einem der Ansprüche 1-4, **dadurch gekennzeichnet, dass** q=3.

7. Folie nach Anspruch 1, die **dadurch gekennzeichnet, dass** eine der folgenden Kombinationen vorhanden ist:

- $Y(q) > 5\% + f(q)\% . P_m . (n-1)$ mit $f(q) = 27 - (3.q)$ und $q = 2$; oder
- $Y(q) > 5\% + f(q)\% . P_m . (n-1)$ mit $f(q) = 27 - (3.q)$ und $q = 3$; oder
- $Y(q) > 5\% + f(q)\% . P_m . (n-1)$ mit $f(q) = 30 - (3.q)$ und $q = 2$; oder
- $Y(q) > 5\% + f(q)\% . P_m . (n-1)$ mit $f(q) = 30 - (3.q)$ und $q = 3$; oder
- $Y(q) > 10\% + f(q)\% . P_m . (n-1)$ mit $f(q) = 27 - (3.q)$ und $q = 2$; oder
- $Y(q) > 10\% + f(q)\% . P_m . (n-1)$ mit $f(q) = 27 - (3.q)$ und $q = 3$; oder
- $Y(q) > 10\% + f(q)\% . P_m . (n-1)$ mit $f(q) = 30 - (3.q)$ und $q = 2$; oder
- $Y(q) > 10\% + f(q)\% . P_m . (n-1)$ mit $f(q) = 30 - (3.q)$ und $q = 3$.

8. Folie nach einem der vorigen Ansprüche, **dadurch gekennzeichnet, dass** sich der Brechungsindex des Materials mit der Textur in einem Bereich zwischen 1,4 bis 1,65 bei 587 nm befindet

9. Folie nach einem der vorigen Ansprüche, **dadurch gekennzeichnet, dass** die Absorption der Folie im Spektralbereich zwischen 400 bis 700 nm geringer als 2% ist und vorzugsweise geringer als 1% und sogar geringer als 0,5%.

10. Folie nach dem vorigen Anspruch, **dadurch gekennzeichnet, dass** das Material mit der Textur aus Mineralglas ist.

11. Folie nach einem der vorigen Ansprüche, **dadurch gekennzeichnet, dass** die Rauheit der texturierten Fläche so beschaffen ist, dass der durchschnittliche $R_{sm}$ Wert höher als 1 mm ist und vorzugsweise höher als 1,5 mm und sogar höher als 2 mm und geringer ist als 8 mm.

12. Folie nach einem der vorigen Ansprüche, **dadurch gekennzeichnet, dass** sie verbundene Muster mit einer Größe in einemBereich zwischen 2 bis 8 mm umfasst.

13. Folie nach einem der vorigen Ansprüche, **dadurch gekennzeichnet, dass** die zweite Hauptseite (82) ebenfalls eine Textur aufweist, wie $P_m . (n-1)$ ist größer als $P_m' . (n'-1)$, wobei $P_m'$ die durchschnittliche Neigung der zweiten Hauptseite darstellt und n' der Brechungsindex des Materials mit der Textur der zweiten Hauptseite ist.

14. Folie nach dem vorigen Anspruch, **dadurch gekennzeichnet, dass** die Textur der zweiten Hauptseite mit durchschnittliche Neigung von $P_m' . 2 . (n'-1)$ aufweist, d.h. geringer als 3° und sogar geringer als 2°.

15. Folie nach einem der vorigen Ansprüche, **dadurch gekennzeichnet, dass**, wenn $Y'(q)$ der Prozentsatz der texturierten Oberfläche mit einer Neigunghöher als $q/(n'-1)$ in Grad der zweiten Hauptseite ist, sich das Folgende Verhältnis ergibt:

$$Y'(q) > 3\% + f(q)\% . P_m' . (n-1)$$

mit $f(q) = 24 - (3.q)$ und
wobei q den Wert 2 sowohl für $Y(q)$ als auch für $Y'(q)$ hat, oder q den Wert 3 sowohl für $Y(q)$ als auch für $Y'(q)$.

16. Folie nach einem der vorigen Ansprüche, **dadurch gekennzeichnet, dass** sie auf einer oder auf ihren beiden Seiten eine Antireflexbeschichtung (72) umfasst.

17. Gewächshaus, ausgestattet mit einer Folie nach einem der vorigen Ansprüche.

18. Herstellungsverfahren einer Folie nach einem der vorigen Ansprüche durch Laminierung mit einer texturierten Druckrolle.

19. Verfahren nach dem vorigen Anspruch, **dadurch gekennzeichnet, dass** die texturierte Druckrolle Muster mit einer durchschnittlichen Neigung trägt, die höher ist als die durchschnittliche Neigung der ersten Hauptseite der erhaltenen Folie.

20. Verfahren nach dem vorigen Anspruch, **dadurch gekennzeichnet, dass** die texturierte Druckrolle Muster mit einer durchschnittlichen Neigung trägt, die um mindestens 0,5° höher ist als die durchschnittliche Neigung der ersten Hauptseite der erhaltenen Folie.

**21.** Verfahren nach dem vorigen Anspruch, **dadurch gekennzeichnet, dass** die texturierte Druckrolle Muster mit einer durchschnittlichen Neigung trägt, die um mindestens 1° höher ist als die durchschnittliche Neigung der ersten Hauptseite der erhaltenen Folie.

**Claims**

**1.** A transparent sheet (70,80)comprising a texture in relief on a first of its main faces (71,81), such that, if n is the refractive index of the material comprising the texture, $P_m$ is the mean slope in degrees of the textured face and Y(q) is the percentage of the textured surface with a slope greater than q/(n-1) in degrees, then Y(q) cumulate the two conditions:

$$Y(q) > 3\% + f(q)\%.P_m.(n-1)$$

and Y(q) > 10%
with f(q) = 24-(3.q)
and q = 2 or 3.

**2.** The sheet as claimed in the preceding claim, **characterized in that**

$$Y(q) > 5\% + f(q)\%.P_m.(n-1).$$

**3.** The sheet as claimed in the preceding claim, **characterized in that**

$$Y(q) > 10\% + f(q)\%.P_m.(n-1).$$

**4.** The sheet as claimed in one of the preceding claims, **characterized in that**
f(q) = 27-(3.q), indeed even f(q) = 30-(3.q).

**5.** The sheet as claimed in one of the preceding claims, **characterized in that** q = 2.

**6.** The sheet as claimed in one of claims 1 to 4, **characterized in that** q = 3.

**7.** The sheet as claimed in claim 1, **characterized in that** one of the following combinations exists:

- Y(q) > 5% + f(q)%.$P_m$. (n-1) with f(q) = 27-(3.q) and q = 2; or
- Y(q) > 5% + f(q)%.$P_m$. (n-1) with f(q) = 27-(3.q) and q = 3; or
- Y(q) > 5% + f(q)%.$P_m$.(n-1) with f(q) = 30-(3.q) and q = 2; or
- Y(q) > 5% + f(q)%.$P_m$.(n-1) with f(q) = 30-(3.q) and q = 3; or
- Y(q) > 10% + f(q)%.$P_m$.(n-1) with f(q) = 27-(3.q) and q = 2; or
- Y(q) > 10% + f(q)%.$P_m$.(n-1) with f(q) = 27-(3.q) and q = 3; or
- Y(q) > 10% + f(q)%.$P_m$.(n-1) with f(q) = 30-(3.q) and q = 2; or
- Y(q) > 10% + f(q)%.$P_m$.(n-1) with f(q) = 30-(3.q) and q = 3.

**8.** The sheet as claimed in one of the preceding claims, **characterized in that** the refractive index of the material comprising the texture is within the range extending from 1.4 to 1.65 at 587 nm.

**9.** The sheet as claimed in one of the preceding claims, **characterized in that** the absorption of the sheet in the spectral range within the range extending from 400 to 700 nm is less than 2% and preferably less than 1% and even less than 0.5%.

**10.** The sheet as claimed in one of the preceding claims, **characterized in that** the material comprising the texture is made of mineral glass.

**11.** The sheet as claimed in one of the preceding claims, **characterized in that** the roughness of the textured surface is such that the mean $R_{Sm}$ is greater than 1 mm and preferably greater than 1.5 mm and even greater than 2 mm, and less than 8 mm.

12. The sheet as claimed in one of the preceding claims, **characterized in that** the texture comprises contiguous patterns with a size within the range extending from 2 to 8 mm.

13. The sheet as claimed in one of the preceding claims, **characterized in that** its second main face (82)also exhibits a texture such that $P_m$.(n-1) is greater than $P_m$'.(n'-1), $P_m$' representing the mean slope of the second main face and n' being the refractive index of the material comprising the texture of the second main face.

14. The sheet as claimed in the preceding claim, **characterized in that** the texture of the second main face has a mean slope such that $P_m$'.2. (n'-1) is less than 3° and even less than 2°.

15. The sheet as claimed in one of the two preceding claims, **characterized in that**, if Y'(q) is the percentage of the textured surface with a slope greater than q/(n'-1) in degrees of the second main face, then there exists the relationship:

$$Y'(q) > 3\% + f(q)\%.P_m'.(n'-1)$$

with f(q) = 24-(3.q) and
q having the value 2 both for Y(q) and for Y'(q), or q having the value 3 both for Y(q) and for Y'(q).

16. The sheet as claimed in one of the preceding claims, **characterized in that** it comprises an antireflective coating (72) on one or on its two faces.

17. A horticultural greenhouse equipped with a sheet of one of the preceding claims.

18. A process for the manufacture of a sheet of one of the preceding sheet claims by rolling with a textured engraved roll.

19. The process as claimed in the preceding claim, **characterized in that** the textured engraved roll supports patterns having a mean slope greater than the mean slope of the first main face of the sheet obtained.

20. The process as claimed in the preceding claim, **characterized in that** the textured engraved roll supports patterns having a mean slope greater by at least 0.5° than the mean slope of the first main face of the sheet obtained.

21. The process as claimed in the preceding claim, **characterized in that** the textured engraved roll supports patterns having a mean slope greater by at least 1° than the mean slope of the first main face of the sheet obtained.

14 cm

Fig 1

7 cm

Fig 2

5 cm

Fig 3

a)

4 cm

b)

Fig 4

a)

b)

Fig 5

Fig 6

Fig 7

72

Fig 8

73   70   71

81

Fig 9

82   80

95   90

94

92   91

Fig 10

93

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03046617 A

- WO 2015032618 A

**Littérature non-brevet citée dans la description**

- Proc 7th IS on light in Horticultural Systems. Acta Hort.956. ISHS, 2012